# EUROPÄISCHE PATENTSCHRIFT

(11) **EP 1 726 725 B1**
(45) Veröffentlichungstag und Bekanntmachung des Hinweises auf die Patenterteilung: **04.03.2009**
(21) Anmeldenummer: 06005977.1
(22) Anmeldetag: 23.03.2006
(51) Int. Cl.: E03B 7/12, F16K 31/46, F16K 1/04, F16K 27/00

(54) **Frostsicheres Aussenwandventil**
Freeze resistant valve for external use
Vanne résistant au gel pour utilisation extérieur

(30) Priorität: 27.05.2005 DE 202005008464 U; 03.11.2005 DE 202005017350 U
(43) Veröffentlichungstag der Anmeldung: 29.11.2006
(73) Patentinhaber: Interforge Klee GmbH, 27356 Rotenburg/Wümme (DE)
(72) Erfinder: Klee, Klaus, 27383 Scheessel (DE)
(74) Vertreter: Eisenführ, Speiser & Partner

(56) Entgegenhaltungen:
- WO-A-20/04094879
- DE-U1- 20 219 008
- GB-A- 442 055
- US-A- 1 606 478
- US-A- 3 012 584
- US-A- 3 952 770
- US-A- 4 182 356
- US-A- 4 316 481
- US-A- 4 844 116

## Beschreibung

Die Erfindung betrifft eine Ventilvorrichtung für den frostsicheren Außenbetrieb, umfassend:
- eine Zulauföffnung,
- eine Abgabeöffnung,
- einen Verbindungskanal, welcher die Zulauföffnung mit der Abgabeöffung verbindet,
- ein Hauptventil, welches ausgebildet ist, um die Fluidverbindung durch de Verbindungkanal in einer offenen Funktionsstellung freizugeben und in einer geschlossenen Funktionsstellung zu verschließen,
- eine Betätigungsvorrichtung zum Betätigen des Hauptventils, und
- Entleerungsmittel zum Entleeren der Ventilvorrichtung in der geschlossenen Funktionsstellung, wobei die Entleerungsmittel eine Bypassleitung umfassen, die einen ersten Verbindungskanalabschnitt mit einem zweiten Verbindungskanalabschnitt verbindet.

Eine Ventilvorrichtung dieser Art ist aus DE 202 19 008 bekannt, deren Offenbarung hiermit durch Bezugnahme zu Offenbarungszwecken voll einbezogen wird-Dieses vorbekannte frostsichere Außenwandventil erreicht die Frostsicherheit dadurch, dass der Innenraum der Ventilvorrichtung nach dem Schließen des Hauptventils durch ein Belüftungsventil belüftet wird. Das Belüftungsventil der vorbekannten Ventilvorrichtung ist ein federbelastetes Ventil, welches sich unter dem Innendruck in der Ventilvorrichtung bei geöffnetem Hauptventil schließt und bei geschlossenem Hauptventil und nachlassendem innendruck durch eine Druckfeder in die geöffnete Stellung bewegt wird, wodurch der Zutritt von Luft in das Ventilinnere möglich ist und das Ablaufen des darin stehenden Wassers durch die Abgabeöffnung erreicht wird.

Diese Ventilvorrichtung kann einen zuverlässigen frostsicheren Betrieb ermöglichen. Es hat sich jedoch in der Praxis gezeigt, dass die vorbekannte Ventilvorrichtung noch weiter verbessert werden kann.

Bei Ventilvorrichtungen, die im Bereich der Trinkwasserversorgung an das Trinkwassernetz angeschlossen werden ist es vorteilhaft und in einer Reihe von Ländern vorgeschrieben, dass ein Rückflussverhinderungsventil vorhanden ist, welches dazu dient, die Einspeisung von verschmutztem Wasser in das Trinkwassernetz entgegen der Flussrichtung durch das Ventil zu verhindern. Solche Rückflussverhinderungsventile werden typischerweise als federbelastete Rückschlagventile ausgeführt. Bei der Abstimmung der Federkraft eines solchen Rückflussverhinderungsventils und des Belüftungsventils des vorbekannten frostsicheren Außenwandventlis kann es jedoch problematisch sein, die Federkräfte so zu dimensionieren, dass einerseits eine sichere Verhinderung des Rückflusses und andererseits eine zuverlässige Öffnung des Belüftungsventils im drucklosen Zustand erzielt wird.

Aus US 4,182,356 ist eine Ventilvorrichtung bekannt, welche zum horizontalen Einbau ausgebildet ist und eine das Hauptventil überbrückende Kanalleitung umfasst, die durch ein elastisches Element durch den Leitungsdruck verschlossen wird. Steigt der Innendruck in der Ventilvorrichtung stromabwärts dieses elastischen Elements an, so wird die Kanalleitung geöffnet und Flüssigkeit kann aus der Ventilvorrichtung in die Zulaufleitung abfließen und der Druck somit gemindert werden. Auf diese Weise strebt die Ventilvorrichtung gemäß US 4,182,356 danach, Beschädigungen durch Frost zu vermeiden.

Der Erfindung liegt die Aufgabe zugrunde, das vorbekannte Ventil weiter zu entwickeln, um einen frostsicheren Außenbetrieb zu gewährleisten und gleichzeitig zu ermöglichen, dass ein Rückflussverhinderungsventil mit der Ventilvorrichtung gekoppelt wird oder in diese integriert wird, ohne dass es zu Funktionsbeeinträchtigungen kommt.

Dies wird durch eine Ventilvorrichtung gemäß Anspruch 1 erreicht.

Die erfindungsgemäße Ventilvorrichtung vermeidet die Notwendigkeit zweier federbetätigter Ventile innerhalb des Ventils und erreicht damit sowohl eine sichere Belüftung des Verbindungskanals im abgesperrten Zustand als auch eine sichere Rückflussverhinderung. Über die Bypassleitung wird der Belüftungsfluss zwischen den Verbindungskanalabschnitten erzielt und damit werden die Druckverhältnisse für eine gesamte Entleerung bzw. Belüftung des Verbindungskanals im frostgefährdeten Bereich geschaffen.

Es hat sich überraschend gezeigt, dass die erfindungsgemäße Ventilvorrichtung eine besonders gute Funktionssicherheit auch bei einer an die Abgabeöffnung der Ventilvorrichtung angeschlossenen Schlauchleitung oder eines anderen angeschlossenen Geräts, welches einen Druckzustand in der Ventilvorrichtung hervorrufen kann, aufweist. In der Praxis kann es beispielsweise erfolgen, dass ein Schlauch mit seinem ersten Ende an die Abgabeöffnung der Ventilvorrichtung angeschlossen wird und dieser Schlauch an seinem zweiten Ende seinerseits selbst eine Verschlussvorrichtung aufweist. In diesem Fall kann im Schlauch und der Ventilvorrichtung unabhängig davon ein Druckzustand aufrecht erhalten werden, ob das Hauptventil der Ventilvorrichtung geöffnet oder geschlossen ist, indem die Absperrvorrichtung am zweiten Schlauchende geschlossen oder gedrosselt wird.

In solchen Fällen vermeidet die erfindungsgemäße Ventilvorrichtung einen durch diese externe Druckbeaufschlagung verursachten unerwünschten Flüssigkeitsaustritt durch die Entleerungsmittel.

Die erfindungsgemäße Fortbildung erzielt eine Sicherheit gegen solchen Flüssigkeitsaustritt, indem die Bypassleitung beidseitig mit dem Druck beaufschlagt wird, der im Inneren des Verbindungskanals bzw. einer daran angeschlossenen Schlauchleitung herrscht. Auf diese Weise wird verhindert, dass ein in der Ventilvorrichtung herrschender Druck zu einem Flüssigkeitsaustritt aus der Ventilvorrichtung führen kann, da die Entleerungsmittel über die Bypassleitung einen gegenüber der Umgebung der Ventilvorrichtung geschlossenen Kreislauf ausbilden.

Dabei ist es besonders bevorzugt, wenn der zweite Verbindungskanalabschnitt in Einbaulage der Ventilvorrichtung in Schwerkraftrichtung oberhalb des ersten Verbindungskanalabschnitts liegt. Auf diese Weise wirkt auf die Öffnung der Bypassleitung, die in den ersten Verbindungskanalabschnitt mündet, eine geringere hydrostatische Kraft als auf die Öffnung der Bypassleitung, die in den zweiten Verbindungskanalabschnitt mündet. Dies bewirkt, dass sich ein Luftfluss von der Abgabeöffnung zu dem zweiten Verbindungskanalabschnitt, von dort durch die Bypassleitung und über die Bypassleitung in den ersten Verbindungskanalabschnitt ausbilden kann, der eine wirksame Belüftung des Verbindungskanals bewirkt.

Weiterhin ist es vorteilhaft, wenn die Bypassleitung den ersten Verbindungskanalabschnitt mit einem Belüftungszwischenraum verbindet, der mit dem zweiten Verbindungskanalabschnitt verbunden ist. Durch diesen Zwischenraum wird ein Luftspeicher bereitgestellt, der zu einem gleichmäßigeren Belüftungsfluss und somit einem gleichmäßigeren Entleerungs-Flüssigkeitsfluss führt.

Insbesondere kann die Bypassleitung vorzugsweise in einem Gehäusewandabschnitt der Ventilvorrichtung ausgebildet sein und in Einbaulage der Ventilvorrichtung von dem Belüftungszwischenraum in Schwerkraftrichtung zumindest in einem Abschnitt abwärts zur Ausgabeöffnung verlaufen. Dies verhindert, dass sich Flüssigkeit im Belüftungszwischenraum und/oder in der Bypassleitung sammeln kann.

Weiterhin ist bevorzugt, die Bypassleitung in jeder Stellung der Betätigungsvorrichtung den ersten und zweiten Verbindungskanalabschnitt verbindet. So kann der Bypasskanal beispielsweise über durchgehende Belüftungskanäle ohne darin enthaltene Ventile oder dergleichen die Verbindungskanalabschnitte verbinden.

Es ist weiterhin bevorzugt, dass die Entleerungsmittel ein Belüftungsventil in der Bypassleitung umfassen. Durch ein solches Belüftungsventil kann die Bypassleitung manuell oder mittels Federkraft- oder Druckbeaufschlagung sicher verschlossen werden und somit in bestimmten Betriebspositionen zuverlässig verhindert werden, dass eine Strömung durch die Bypassleitung erfolgt.

Das Belüftungsventil erlaubt einen Zutritt von Umgebungsluft in den Verbindungskanal zwecks Entleerung der Flüssigkeit aus dem Verbindungskanal in einer geöffneten Stellung und verhindert in einer geschlossenen Stellung den Luft-bzw. Flüssigkeitsfluss durch die Bypassleitung. Auf diese Weise wird einerseits eine sichere Belüftung erreicht und andererseits verhindert, dass unerwünscht Wasser aus der Ventilvorrichtung austreten kann, wenn dies nicht erwünscht ist.

Dabei ist es besonders bevorzugt, wenn das Belüftungsventil einen Ventilsitz und einen Ventilkörper umfasst, der in einer ersten Position der Betätigungsvorrichtung auf der ersten Bewegungsbahn auf den Ventilsitz gepresst ist und in einer zweiten Position der Betätigungsvorrichtung auf der ersten Bewegungsbahn vom Ventilsitz abgehoben ist. Auf diese Weise kann das Belüftungsventil direkt durch die Bewegung der Betätigungsvorrichtung entlang der ersten Bewegungsbahn betätigt werden und in definierte Positionen zur Belüftung bzw. zur Verhinderung eines Flüssigkeitsaustritts aus dem Innenraum bewegt werden.

Eine weitere wichtige Fortbildung der erfindungsgemäßen Ventilvorrichtung besteht darin, dass die Betätigungsmittel ausgebildet sind, um die Entleerungsmittel zum Entleeren der Ventilvorrichtung durch Bewegen der Betätigungsvorrichtung entlang einer ersten Bewegungsbahn zu öffnen bzw. zu schließen und um das Hauptventil durch Bewegen der Betätigungsvorrichtung entlang einer zweiten Bewegungsbahn zu öffnen bzw. zu schließen.

Diese erfindungsgemäße Fortbildung greift auf eine spezielle, nur teilweise autonome Betätigung der Entleerungsmittel zurück und erreicht dadurch, dass die federbetätigte automatische Betätigung der Entleerungsmittel nach dem Stand der Technik nicht erforderlich ist. Die Fortbildung weist den Vorteil auf, dass die manuelle Betätigung der Entleerungsmittel durch dieselben Betätigungsmittel erfolgt, die auch zum Öffnen und Schließen des Hauptventils dienen. Hierbei wird durch zwei unterschiedliche Bewegungsbahnen zum Öffnen des Hauptventils und zum Entleeren der Ventilvorrichtung dem Benutzer eine sichere und einfach nachvollziehbare Betätigung der erfindungemäßen Ventilvorrichtung ermöglicht. Die Bewegung der Betätigungsmittel entlang zweier unterschiedlicher Bewegungsbahnen ermöglicht zudem, einen besonders einfachen und robusten Aufbau der Ventilvorrichtung zu realisieren und hierdurch die Betriebssicherheit und Langlebigkeit weiter zu erhöhen.

Erfindungsgemäß soll unter der ersten Bewegungsbahn eine rotatorische, translatorische oder in anderer Weise ausgerichtete Bewegung der Betätigungsvorrichtung oder eines Teils der Betätigungsvorrichtung verstanden werden. In gleicher Weise soll unter der zweiten Bewegungsbahn eine rotatorische, translatorische oder anders ausgerichtete Bewegung der Betätigungsvorrichtung oder des zuvor genannten, gleichen Teils der Betätigungsvorrichtung verstanden werden. Die erste und zweite Bewegungsbahn sind dabei erfindungsgemäß unterschiedlich ausgerichtet, können jedoch beide entlang ihrer Bewegungsbahn in einer Richtung und der dazu entgegengesetzten Richtung ausgeführt werden, um beispielsweise eine Öffnungsbewegung und eine Schließbewegung durch Bewegung in entgegensetzten Richtungen entlang einer übereinstimmenden Bewegungsbahn zu erreichen.

Eine besonders günstige Ausführungsform der Ventilvorrichtung nach der Erfindung umfasst das zuvor beschriebene Belüftungsventil und die zuvor beschriebenen Betätigungsmittel zum Bewegen der Betätigungsvorrichtung entlang einer ersten und zweiten Bewegungsbahn. Dies ermöglicht es, dass die erste Bewegungsbahn zur Betätigung des Belüftungsventils dient und die zweite Bewegungsbahn zur Betätigung des Hauptventils dient. Auf diese Weise wird eine sichere und für einen Benutzer einfach nachvollziehbare Betätigung des Belüftungsventils und des Hauptventils durch Bedienung einer einzigen Betätigungsvorrichtung erzielt. Das Belüftungsventil wird dabei vorzugsweise direkt durch die Bewegung der Betätigungsvorrichtung entlang der ersten Bewegungsbahn betätigt.

Es ist weiterhin besonders bevorzugt, wenn die zweite Bewegungsbahn eine Drehbewegungsbahn ist und die erste Bewegungsbahn eine axial zu dieser Drehbewegungsbahn liegende translatorische Bewegungsbahn ist. Dies ermöglicht einem Benutzer eine intuitive Betätigung der erfindungsgemäßen Ventilvorrichtung, indem die eigentliche Öffnung und Schließung des Hauptventils durch eine gewohnte Drehbewegung erreicht wird und die Öffnung und Schließung der Entleerungsmittel durch eine axial-translatorische Bewegung bewirkt wird.

Es ist weiterhin bevorzugt, wenn die Betätigungsvorrichtung ein in den zwei Bewegungsbahnen bewegbares Betätigungselement umfasst. Ein solches Betätigungselement kann beispielsweise ein Drehgriff, Zug- oder Druckknopf oder Schwenkhebel sein.

Weiterhin bevorzugt ist es, wenn die Entleerungsmittel eine Belüftungsöffnung aufweisen, die einen Zutritt von Umgebungsluft in den Verbindungskanal zwecks Entleerung der Flüssigkeit aus dem Verbindungskanal erlaubt, vorzugsweise durch die Abgabeöffnung. Dies ermöglicht die sichere Belüftung des Innenraums der Ventilvorrichtung.

Weiterhin ist bevorzugt, wenn die erfindungsgemäße Ventilvorrichtung eine Führungsvorrichtung zum Führen der Betätigungsvorrichtung entlang der ersten und zweiten Bewegungsbahn aufweist. Eine solche Führungsvorrichtung kann in Form einer Schwenk- oder Drehachse, eines Schiebesitzes oder Ähnlichem bereitgestellt werden und ist besonders bevorzugt, da hierdurch Fehlbedienungen durch einen Benutzer ausgeschlossen werden können, indem nur eine Bewegung der Betätigungsvorrichtung entlang der geführten Richtungen erfolgen kann. Auf diese Weise kann einerseits eine vorbestimmte Bewegungsrichtung als auch ein vorbestimmter Bewegungsablauf zuverlässig sichergestellt werden und hierdurch beispielsweise bestimmte Funktionszustände der erfindungsgemäßen Ventilvorrichtung in einer vorbestimmten Reihenfolge durchlaufen werden.

Dabei ist es besonders bevorzugt, wenn die Führungsvorrichtung die Betätigungsvorrichtung aus einer ersten, geschlossenen Position, in der das Hauptventil geschlossen und die Entleerungsmittel in einer Entleerungsposition sind in einer ersten Betätigungsphase entlang einer ersten Richtung auf der ersten Bewegungsbahn in eine zweite Position führen, in der das Hauptventil geschlossen und die Entleerungsmittel in einer Nicht-Entleerungsposition sind, und in einer zweiten Betätigungsphase entlang einer ersten Richtung auf der zweiten Bewegungsbahn in eine dritte, geöffnete Position führen, in der das Hauptventil geöffnet und die Entleerungsmittel in einer Nicht-Entleerungsposition sind. Auf diese Weise werden, ausgehend von der geschlossenen Position des Hauptventils zunächst die Entleerungsmittel in eine Position gebracht, in denen keine Entleerung stattfinden kann, d.h. beispielsweise das Belüftungsventil geschlossen ist, und hierauf folgend in der zweiten Betätigungsphase das Hauptventil geöffnet wird, wobei die Entleerungsmittel weiterhin in der zuvor eingestellten Position bleiben, d.h. beispielsweise das Belüftungsventil weiterhin geschlossen bleibt. So wird sicher verhindert, dass in der geöffneten Position des Hauptventils keine Flüssigkeit entlang der Entleerungsmittel durchtreten kann, d.h. beispielsweise durch das Belüftungsventil nach außen dringen kann.

Dabei ist es weiterhin bevorzugt, wenn die Führungsvorrichtung die Betätigungsvorrichtung aus der dritten, geöffneten Position in einer dritten Betätigungsphase in einer zweiten Richtung entlang der zweiten Bewegungsbahn entgegengesetzt zur Bewegung der zweiten Betätigungsphase zurück in die zweite Position führen, und in einer vierten Betätigungsphase in einer zweiten Richtung entlang der ersten Bewegungsbahn entgegengesetzt zur Bewegung der ersten Betätigungsphase zurück in die erste Position führen. Auf diese Weise wird erreicht, dass durch intuitive Betätigung der Betätigungsvorrichtung durch einen Benutzer in genau der entgegengesetzten Reihenfolge und Richtung wie zuvor der ursprüngliche, geschlossene Zustand des Hauptventils wieder erreicht wird und eine Entleerung des Innenraums der Ventilvorrichtung erzielt wird.

Es ist weiterhin bevorzugt, wenn die Betätigungsmittel eine Kulissenführung umfassen. Eine Kulissenführung eignet sich in besonderer Weise für eine sichere, zuverlässige und kostengünstige Ausbildung der Führungsmittel für die Betätigungsmittel und kann dabei eine große Vielzahl von Bewegungsbahnen bereitstellen.

Dabei ist es besonders bevorzugt, wenn die Kulissenführung mindestens einen Stift umfasst, der mit einem Gehäuseabschnitt der Ventilvorrichtung oder mit einem Betätigungsknopf der Betätigungsmittel verbunden ist, und eine den Stift führende Kulissenbahn, die entsprechend an dem Betätigungsknopf der Betätigungsmittel oder am Gehäuse der Ventilvorrichtung ausgebildet ist. Eine solche Art der Kulissenführung mit Stift und Kulissenbahn ist für die Zwecke der erfindungsgemäßen Ventilvorrichtung bevorzugt geeignet und lässt sich platzsparend im Bereich der Betätigungsvorrichtung anordnen.

Es ist bevorzugt, das Hauptventil als Schieberventil, insbesondere als Drehschieberventil auszubilden.

Diese Fortbildung beruht auf der Erkenntnis, dass ein gewisser Austritt von Wasser aus der Abgabeöffnung bzw. dem Abfluss bei frostsicheren Ventilen unvermeidbar ist und folglich andere Wege gefunden werden müssen, um eine Fehlbedienung auszuschließen. Dies wird erreicht, indem dem Benutzer eine vollkommen andere Haptik bei der Betätigung der Ventilvorrichtung bereitgestellt wird. Durch die Ausführung des Ventils als Schieberventil wird dem Benutzer vermittelt, dass in einer exakt definierten Verschlussposition das Ventil geschlossen ist und auch nicht durch weitere Krafteinwirkung weiter geschlossen werden kann. Auf diese Weise wird verhindert, dass der Benutzer sich veranlasst sieht, die Ventilvorrichtung mit einer unzulässig hohen Kraft zu bedienen.

Insbesondere ist es bevorzugt, das erste Ventil als Drehschieberventil auszubilden. Diese Ausführungsform ist für die Konstruktion der erfindungsgemäßen Ventilvorrichtungen von besonderem Vorteil, da auf diese Weise eine einfache und zuverlässige Übertragung der Betätigungskräfte von der Betätigungsvorrichtung auf das erste Ventil möglich ist und die gewohnte Drehbewegung als zweite Bewegungsbahn realisiert werden kann.

Darüber hinaus bietet die erfindungsgemäße Ventilvorrichtung den Vorteil, dass der Benutzer bei einem Schieberventil die Dichtungsflächen nicht durch übermäßige Kraftanwendung aufeinander pressen kann. Ein Schieberventil ist grundsätzlich dadurch gekennzeichnet, dass die Durchlassöffnung(en) geschlossen werden, indem eine Scherbewegung zwischen Verschlusskörper und Durchlassöffnung stattfindet, in der Regel eine quer zur Durchflussrichtung liegende Schiebe- oder Drehbewegung. Die Dichtungsflächen werden dadurch in der Regel nicht senkrecht aufeinander zubewegt und eine erhöhte Betätigungskraft kann nicht zu einer erhöhten Anpresskraft zwischen den Dichtungsflächen führen. Auf diese Weise wird eine Beschädigung der Dichtungsflächen durch eine solche Fehlbedienung ausgeschlossen.

Zu Einzelheiten und Vorteilen der Gestaltung des Hauptventils wird auf die Beschreibung zu Anspruch 1 und das Ausführungsbeispiel in DE 20 2005 008 464 Bezug genommen.

Es ist dabei besonders bevorzugt, wenn das Hauptventil ein erstes Ventilelement mit mindestens einer Durchflussöffnung und ein zweites Ventilelement umfasst , das um eine Achse drehbar ist und mindestens eine exzentrische Dichtungsfläche aufweist, welche die Durchflussöffnung(en) des ersten Ventilelements in der geschlossenen Funktionsstellung verschließt (verschließen). Diese Ausführungsform erlaubt eine robuste Konstruktion und eine sichere Abdichtung des ersten Ventils der Ventilvorrichtung.

Dabei ist es insbesondere bevorzugt, wenn das erste Ventilelement und das zweite Ventilelement in offener und geschlossener Funktionsstellung den gleichen axialen Abstand zueinander aufweisen. Auf diese Weise wird die Bewegung des ersten und zweiten Ventilkörpers zueinander weitestgehend vereinfacht und eine robuste Konstruktion der Ventilvorrichtung erzielt.

Insbesondere ist es dabei vorteilhaft, wenn das erste Ventilelement als Scheibe mit zwei exzentrischen Öffnungen ausgebildet ist. Durch die zwei exzentrischen Öffnungen wird ein ausreichender Durchflussquerschnitt durch das erste Ventilelement bereitgestellt, wobei die Öffnungen dennoch eine ausreichende Größe aufweisen, um unempfindlich gegenüber Verschmutzungen oder Verkalkungen zu sein. In diesem Fall ist das zweite Ventilelement vorzugsweise mit zwei Dichtungsflächen versehen, die ebenso exzentrisch angeordnet sind wie die Öffnungen im ersten Ventilelement. Vorzugsweise sind diese Öffnungen um 180° zueinander versetzt und erstrecken sich jeweils über einen Winkelbereich von etwa 90°.

Es ist insbesondere bevorzugt, dass das Hauptventil zumindest ein Ventilelement aus einem keramischen Material aufweist, vorzugsweise zwei Ventilelemente aus einem keramischen Material. Keramische Materialien sind für die erfindungsgemäße Ventilvorrichtung besonders gut geeignet, da sie einen nahezu verschleißfreien Betrieb erlauben und die in einem Schiebeventil auftretenden Belastungen eine werkstoffgerechte Beanspruchung keramischer Materialien erlauben und somit ein zuverlässiger Betrieb über die Lebensdauer der Ventilvorrichtung erzielt werden kann, ohne dass Wartungsmaßnahmen am Hauptventil erforderlich wären.

Weiterhin ist bevorzugt, dass die Betätigungsvorrichtung um etwa 90° verschwenkt werden muss, um von der ersten in die zweite Funktionsstellung zu gelangen. Auf diese Weise wird dem Benutzer der Ventilvorrichtung eine eindeutige optische und haptische Rückmeldung gegeben, ob die offene Funktionsstellung bzw. die geschlossene Funktionsstellung erreicht ist. Diese Ausführungsform ist insbesondere dann vorteilhaft, wenn die Betätigungsvorrichtung als Schwenkhebel oder Drehgriff ausgeführt ist.

Vorzugsweise ist das Ventil zum horizontalen Einbau in eine Außenwand ausgebildet. Diese Ausführungsform ist insbesondere dann für die erfindungsgemäße Ventilvorrichtung vorteilhaft, wenn die Belüftung zu einem großen Teil durch Abfluss des Wassers aus der Abgabeöffnung erzielt wird und folglich die erfindungsgemäßen Vorteile in besonders starkem Maße Bedeutung erlangen.

Weiterhin ist es bevorzugt, dass die Betätigungsvorrichtung ein manuell betätigbares Griffelement aufweist, das mit einer Verbindungsstange zusammenwirkt, die sich durch einen Teil des Verbindungskanals erstreckt, um die Bewegung entlang der ersten Bewegungsbahn auf das Hauptventil zu übertragen. Auf diese Weise wird es ermöglicht, eine manuelle Betätigung im äußeren, frostgefährdeten Bereich vorzunehmen und das Hauptventil im inneren, frostgeschützten Bereich anzuordnen, was die Frostsicherheit weiter erhöht. Zudem wird ein schlanker und robuster Aufbau erreicht.

Eine weitere Fortbildung ist durch eine erste Rückflussverhinderungsvorrichtung die zwischen Zuflussöffnung und Hauptventil angeordnet ist, gekennzeichnet, zur Verhinderung des Zutritts von Schmutzwasser aus der Ventilvorrichtung durch die Zuflussöffnung. Dies Ausführungsform ist für die Anwendung der erfindungsgemäßen Ventilvorrichtung in Trinkwassernetzen vorteilhaft, um hierdurch den Vorschriften für Armaturen in solchen Netzen nachzukommen und zu verhindern, dass bei Überdruck in der Ventilvorrichtung Wasser aus der Ventilvorrichtung in das Trinkwassernetz gelangt.

Eine bevorzugte Ausführungsform wird anhand der anhängenden Figuren beschrieben. Es zeigen:
Fig. 1: Eine Explosionsdarstellung der bevorzugten Ausführungsform,
Fig. 2: Eine längsgeschnittene Seitenansicht der bevorzugten Ausführungsform der erfindungsgemäßen Ventilvorrichtung in geschlossener Stellung mit offenem Belüftungsventil,
Fig. 3: Eine längsgeschnittene Detailansicht der äußeren Abschnitts der erfindungsgemäßen Ventilvorrichtung mit offenem Belüftungsventil,
Fig. 4: Eine längsgeschnittene Seitenansicht des äußeren Abschnitts der erfindungsgemäßen Ventilvorrichtung mit geschlossenem Belüftungsventil, und
Fig. 5: Eine längsgeschnittene Seitenansicht des äußeren Abschnitts einer zweiten Ausführungsform der erfindungsgemäßen Ventilvorrichtung.

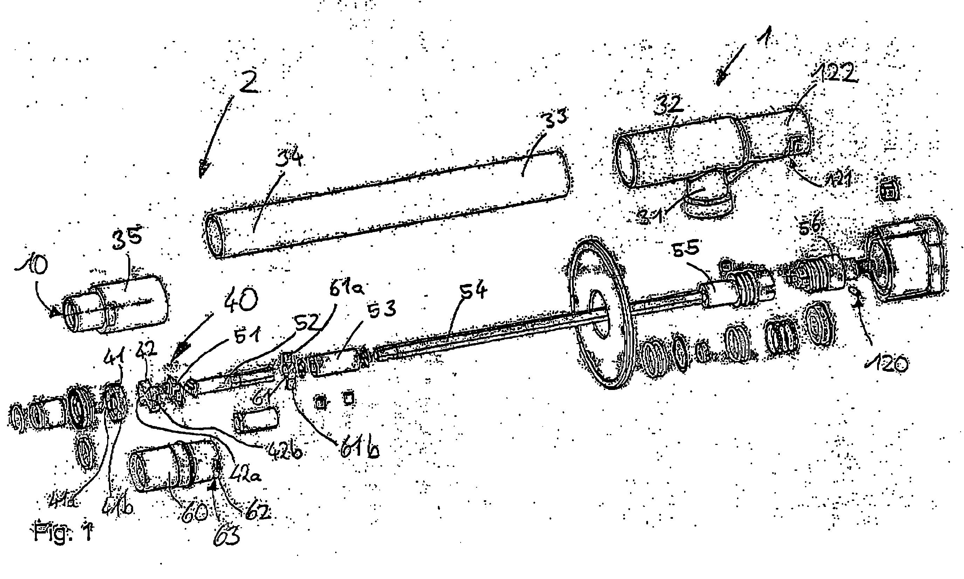

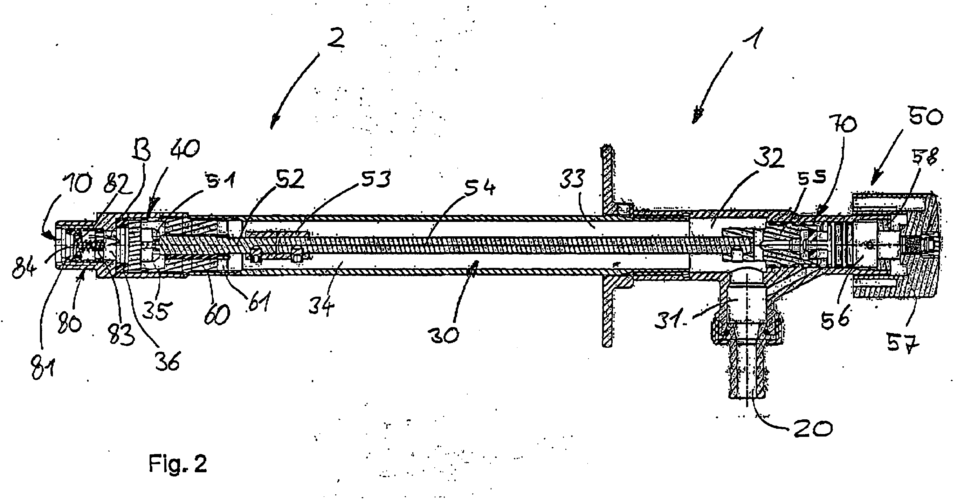

Wie in Fig. 1 und 2 zu erkennen, umfasst die erfindungsgemäße Ventilvorrichtung einen äußeren Abschnitt 1 und einen inneren Abschnitt 2.

Im äußeren Ventilvorrichtungsabschnitt 1 ist eine Abgabeöffnung 20, und eine Betätigungsvorrichtung 50 sowie ein Verbindungskanal 30 mit äußeren Verbindungskanalabschnitten 31-33 angeordnet.

Im inneren Ventilvorrichtungsabschnitt 2 ist eine Zulauföffnung 10, ein Hauptventil 40 sowie untere Verbindungskanalabschnitte 34-36 des Verbindungskanals 30 angeordnet.

In Einbaulage ist der innere Ventilvorrichtungsabschnitt im Mauerwerk oder Innenraum eines Gebäudes angeordnet und der äußere Ventilvorrichtungsabschnitt ist außerhalb dieses Mauerwerks im Freien angeordnet und folglich ,der Umgebungstemperatur ausgesetzt. In Einbaulage weist die Abgabeöffnung 20 nach unten in Schwerkraftrichtung.

In Fig. 2 ist die Ventilvorrichtung mit einem geschlossenen Hauptventil 40 dargestellt. Das Hauptventil 40 umfasst ein erstes Ventilelement 41, das als keramische Scheibe ausgebildet ist und zwei exzentrische Bohrungen 41a,b aufweist. Weiterhin umfasst das Hauptventil 40 ein zweites Ventilelement 42, das einen Querschnitt in Gestalt zweier mit ihren Spitzen aufeinanderstoßender Dreiecke aufweist, die gegenüberliegend zu diesen Spitzen halbrund ausgeformt sind. Die Dreiecksflächen des zweiten Ventilelements 42 bilden zwei Ventildichtungsflächen 42a,b aus, welche so bemessen sind, dass sie die erste und zweite Öffnung im ersten Ventilelement 41 verschließen können.

Das Hauptventil 40 verhindert in der geschlossenen Stellung den Zutritt von Wasser aus der Zulauföffnung 10 in den Verbindungskanal 30, indem das erste Ventilelement 41 so gegen das zweite Ventilelement 42 verdreht ist, dass die zwei exzentrischen Bohrungen 41 a,b im ersten Ventilelement auf zwei Ventildichtungsflächen 42a,b des zweiten Ventilelements zu liegen kommen und durch diese abgedichtet werden.

Wird das erste Ventilelement 41 um 90° zur Längsachse der Ventilvorrichtung gedreht, so kommen die beiden exzentrischen Bohrungen 41 a,b in Flucht mit zwei entsprechenden Öffnungen im zweiten Ventilelement 42, so dass Wasser von der Zulauföffnung durch die Ventilvorrichtung zu der Abgabeöffnung fließen kann.

Das Wasser strömt hierzu durch die Zulauföffnung 10 in horizontaler Richtung in die Ventilvorrichtung ein. Es passiert dann ein Rückschlagventil 80, das hinter der Zulauföffnung angeordnet ist. Das Rückschlagventil 80 umfasst einen Ventilsitz 81, in den ein Ventilkörper 82 mittels einer Druckfeder 83 gedrückt wird. Der Wasserdruck übt eine gegen die Druckfeder 83 wirkende Kraft auf die Ventilkörperfläche 84 aus und hebt dadurch den Ventilkörper 82 von dem Ventilkörpersitz 81 ab, wodurch ein Zulauf von Wasser ermöglicht wird.

Das Wasser strömt dann weiter, wie mit Pfeil B gekennzeichnet, in Richtung des Hauptventils 40.

Das zweite Ventilelement 42 ist drehmomentfest mit einem Kupplungsstücks 51 verbunden, das seinerseits mittels einer Feder-Nutverbindung mit einem ersten Ende einer kurzen Betätigungsstange 52 drehmomentfest verbunden ist. Die kurze Betätigungsstange 52 ist an ihrem anderen Ende als Sechskant ausgebildet und ihrerseits mittels einer Innensechskanthülse 53 mit einer langen Betätigungsstange 54, die ebenfalls einen Sechskantquerschnitt aufweist, drehmomentfest verbunden.

Die lange Betätigungsstange ist an ihrem anderen Ende mittels eines Adapterstücks 55 drehmomentfest aber axial verschiebbar mit einer Ventilhülse 56 verbunden, die ihrerseits drehmomentfest mit einer Betätigungskappe 57 verbunden ist. Auf diese Weise kann ein in die Betätigungskappe 57 eingeleitetes Drehmoment auf das zweite Ventilelement 42 übertragen werden, um dieses entsprechend zu verdrehen und das Hauptventil auf diese Weise von der geschlossenen Funktionsstellung in die offene Funktionsstellung zu bringen und umgekehrt.

Die Betätigungskappe 57 ist mitsamt der Ventilhülse 56 axial beweglich zu den übrigen Bauteilen der Ventilvorrichtung ausgebildet. Die Ventilhülse wird durch eine Hülsenmutter 58 mit Außengewinde, welches in ein entsprechendes Innengewinde in einem Wandabschnitt 122 des Gehäuses der Ventilvorrichtung eingeschraubt ist, daran gehindert, in Richtung der Betätigungskappe aus der Ventilvorrichtung herausgezogen werden zu können.

Das Hauptventil 40 ist in einem Rohrkanalabschnitt 35 angeordnet, der mit einem Rohrkanalabschnitt 33,34 verschraubt ist. Durch den Rohrkanalabschnitt 33,34 erstrecken sich die kurze und lange Betätigungsstange 52, 54 und verbinden das Hauptventil 40 mit der an einem Rohrstück angeordneten Betätigungskappe 57.

Der Rohrkanalabschnitt 35 und die Rohrkanalabschnitte 33,34 sind mittels einer Zwischenhülse 60 miteinander verbunden, indem die Rohrabschnitte 35 und 33,34 jeweils mit einem Innengewinde auf ein entsprechendes Außengewinde der Zwischenhülse 60 aufgeschraubt sind. Die Zwischenhülse 60 wirkt mit einem Anschlagstück 61 zusammen, welches auf den Sechskantabschnitt der kurzen Betätigungsstange 52 drehmomentfest mittels eines Innensechskants aufgeschoben ist und welches zwei sich radial erstreckende Anschlagarme 61a,b aufweist. Die Anschlagarme 61a,b wirken mit Anschlägen 62 und 63 an der Zwischenhülse 60 zusammen und beschränken auf diese Weise den Schwenkwinkel der kurzen Betätigungsstange 52 und folglich der gesamten Betätigungsvorrichtung auf 90°.

Das Anschlagelement 61 ist so zum zweiten Ventilelement 42 ausgerichtet, dass hierdurch in Zusammenwirkung mit einer entsprechenden Ausrichtung der Zwischenhülse 60 zum ersten Ventilelement 41 das Hauptventil 40 in der in Fig. 1 und 2 dargestellten Anschlagstellung geschlossen ist und in der hierzu durch Drehen der Betätigungsstange um 90° erreichbaren anderen Anschlagstellung geöffnet ist.

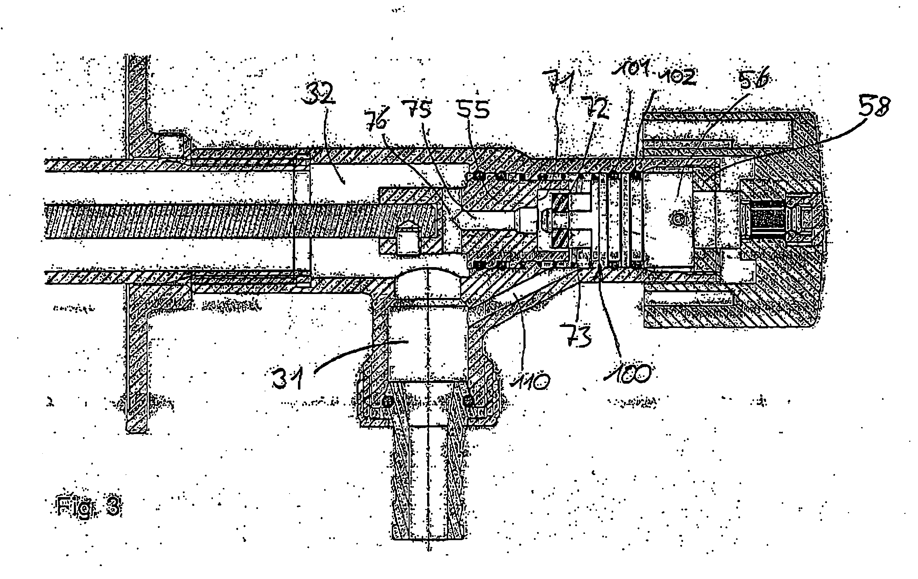

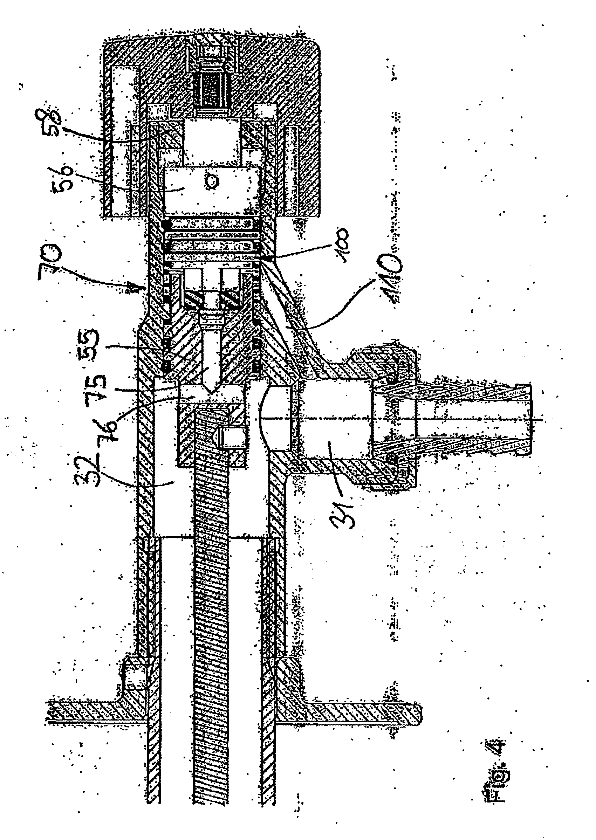

Zwischen der Betätigungskappe 57 und dem Rohrkanalabschnitt 32 ist ein Belüftungsventil 70 angeordnet, welches dazu dient, das Innere der Ventilvorrichtung zu belüften. Aufbau und Funktion des Belüftungsventils 70 werden anhand Fig. 3 und 4 beschrieben.

Das Belüftungsventil 70 umfasst einen Ventilsitz 71 und einen Ventilkörper 72, der einstückig mit der Ventilhülse 56 verbunden ist. Der Ventilsitz 71 des Belüftungsventils ist in dem Adapterstück 55 ausgebildet, das mittels zweier O-Ringe abgedichtet in der Gehäusewandung der Ventilvorrichtung eingesetzt ist. In dem Adapterstück 55 sind Bohrungen 75,76 ausgebildet, die das Belüftungsventil mit dem Verbindungskanalabschnitt 32 verbinden.

Ein Belüftungszwischenraum 100 ist zwischen der Betätigungskappe 57 und dem Belüftungsventil 70 angeordnet und mittels zweier O-Ringe 101,102 in Richtung der Betätigungskappe abgedichtet. Ein Bypasskanal 110 führt von dem Belüftungszwischenraum 100 schräg abwärts in den Verbindungskanalabschnitt 31 in der Nähe der Abgabeöffnung 20.

Auf diese Weise kann über eine geschlossene Bypassleitung, gebildet durch den Bypasskanal 110, den Belüftungszwischenraum 100 und die Bohrungen 75,76 Luft vom Verbindungskanalabschnitt 31 zum Verbindungskanalabschnitt 32 strömen.

Eine Druckfeder 73 stützt sich an einem ringförmigen Absatz der Gehäusewand ab und drückt die Ventilhülse 56 und den Ventilkörper 72 mitsamt der daran befestigten Betätigungskappe 57 nach außen.

Wie aus Fig. 1 ersichtlich, ist an der Ventilhülse 56 ein radial angeordneter Führungsstift 120 befestigt, der innerhalb einer Kulissenbahn 121 in einem feststehenden Wandabschnitt 122 der Ventilvorrichtung geführt wird. Die Kulissenbahn 121 erlaubt es, dass die Betätigungskappe 57 mit der daran befestigten Ventilhülse aus einer Ausgangsstellung, in der das Hauptventil geschlossen und das Belüftungsventil freigegeben ist, nach innen in Richtung des Belüftungsventils axial bewegt wird und hierbei das Belüftungsventil über Kontaktdruckflächen zwangsweise schließt. Wenn das Belüftungsventil in der geschlossenen Stellung ist, erlaubt die Kulissenbahn 121 eine Verdrehung der Betätigungskappe um 90°. Diese Drehung wird über die Ventilhülse 56 auf das Adapterstück 55 übertragen und dann weiter über die Betätigungsstange 54 auf den Ventilkörper 42, der folglich in die offene Stellung gedreht werden kann.

Wird die Betätigungskappe um 90° zurückgedreht, so drückt das Federelement 73 die Betätigungskappe und den Ventilkörper 72 automatisch wieder nach Außen in die Ausgangsstellung. Dies ermöglicht somit die Wasserentleerung des Innenraums der Ventilvorrichtung, indem Luft von der Abgabeöffnung über die Bypassleitung in den oberen Bereich der Ventilvorrichtung eindringen kann und hierdurch das Restwasser aus Ventilvorrichtung durch die Abgabeöffnung gleichzeitig ablaufen kann.

Wenn jedoch in der Ventilvorrichtung ein Druck verbleibt, beispielsweise weil in einem angeschlossenen Schlauch ein Druck vorherrscht, so wirkt dieser Innendruck über die Bypassleitung auch in dem Belüftungszwischenraum 100. Es findet folglich weder eine Belüftung des Innenraums der Ventilvorrichtung statt, noch ist es möglich, dass Flüssigkeit über das Belüftungsventil nach Außen dringt, wenn ein Innendruck bei geschlossenem Hauptventil verbleibt. Auf diese Weise wird zuverlässig verhindert, dass unerwünscht Flüssigkeit durch das Belüftungsventil austritt.

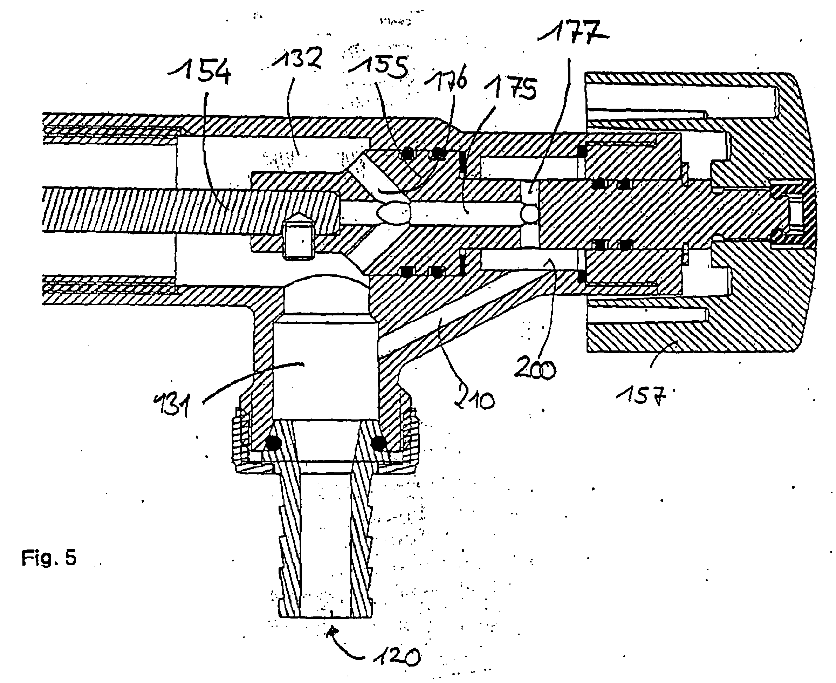

Fig. 5 zeigt eine zweite Ausführungsform des erfindungsgemäßen Außenwandventils. Diese Ausführungsform weist kein Belüftungsventil auf und verzichtet somit auf eine Zwangsöffnung durch axiales Verschieben (insbesondere Drücken) des Betätigungsknopfs.

Die dargestellte Variante des erfindungsgemäßen Außenwandventils weist ebenfalls eine Betätigungskappe 157 auf, die mit einer langen Betätigungsstange 154 über ein Adapterstück 155 drehmomentfest verbunden ist. In dem Adapterstück 155 sind Belüftungskanäle ausgebildet, die einen Bypasskanal 210, der sich von der Nähe einer Abgabeöffnung 120 schräg nach oben zu einem Belüftungszwischenraum 200 erstreckt, mit einem Kanalabschnitt oberhalb der Mündung des Bypasskanals 210 verbinden. Auf diese Weise ist eine permanent offene Verbindung zwischen dem unteren Kanalabschnitt 131 und dem oberen Kanalabschnitt 132 über den Bypasskanal 210, den Belüftungszwischenraum 200 und die Belüftungskanäle 175-177 gewährleistet, so dass eine sichere Belüftung des Innenraums der Ventilvorrichtung gewährleistet ist, wenn die Betätigungskappe von der offenen in die geschlossene Stellung bewegt wird.

Bei der in Fig. 5 gezeigten Ausführungsform ist die Betätigungskappe nicht axial verschiebbar, sondern kann nur um einem Winkel von 90° um die Längsachse des Außenwandventils verdreht werden. Auf eine Kulissenführung der Betätigungskappe kann bei der in Fig. 5 gezeigten Ausführungsform verzichtet werden.

## Patentansprüche

1. Ventilvorrichtung für den frostsicheren Außenbetrieb, umfassend:
- eine Zulauföffnung (10),
- eine Abgabeöffnung (20),
- einen Verbindungskanal (30), welcher die Zulauföffnung mit der Abgabeöffnung verbindet,
- ein Hauptventil (40), welches ausgebildet ist, um die Fluidverbindung durch den Verbindungskanal in einer offenen Funktionsstellung freizugeben und in einer geschlossenen Funktionsstellung zu verschließen,
- eine Betätigungsvorrichtung (50,57) zum Betätigen des Hauptventils, und
- Entleerungsmittel (70) zum Entleeren der Ventilvorrichtung in der geschlossenen Funktionsstellung, wobei
die Entleerungsmittel eine Bypassleitung (110) umfassen, die einen ersten Verbindungskanalabschnitt (31) mit einem zweiten Verbindungskanalabschnitt (32) verbindet, **dadurch gekennzeichnet, dass** der zweite Verbindungskanalabschnitt (32) in Einbaulage der Ventilvorrichtung in Schwerkraftrichtung oberhalb des ersten Verbindungskanalabschnitts (31) liegt.

2. Ventilvorrichtung nach Anspruch 1,
**dadurch gekennzeichnet, dass** der erste Verbindungskanalabschnitt (31) in Einbaulage der Ventilvorrichtung geringer von der Abgabeöffnung beabstandet ist als der zweite Verbindungskanalabschnitt (32).

3. Ventilvorrichtung nach einem der vorhergehenden Ansprüche,
**dadurch gekennzeichnet, dass** die Bypassleitung (110) den ersten Verbindungskanalabschnitt (31) mit einem Belüftungszwischenraum (100) verbindet, der mit dem zweiten Verbindungskanalabschnitt (32) verbunden ist.

4. Ventilvorrichtung nach einem der vorhergehenden Ansprüche,
**dadurch gekennzeichnet, dass** die Bypassleitung in einem Gehäusewandabschnitt der Ventilvorrichtung ausgebildet ist und in Einbaulage der Ventilvorrichtung von dem Belüftungszwischenraum zumindest in einem Abschnitt in Schwerkraftrichtung abwärts zur Ausgabeöffnung verläuft.

5. Ventilvorrichtung nach einem der vorhergehenden Ansprüche,
**dadurch gekennzeichnet, dass** die Bypassleitung in jeder Stellung der Betätigungsvorrichtung den ersten und zweiten Verbindungskanalabschnitt verbindet.

6. Ventilvorrichtung nach einem der vorhergehenden Ansprüche 1-5,
**dadurch gekennzeichnet, dass** die Entleerungsmittel ein in der Bypassleitung angeordnetes Belüftungsventil (70) aufweisen, das einen Zutritt von Umgebungsluft in den Verbindungskanal durch die Bypassleitung zwecks Entleerung der Flüssigkeit aus dem Verbindungskanal in einer geöffneten Stellung erlaubt und in einer geschlossenen Stellung verhindert.

7. Ventilvorrichtung nach Anspruch 6,
**dadurch gekennzeichnet, dass** das Belüftungsventil einen Ventilsitz (71) und einen Ventilkörper (72) umfasst, der in einer ersten Position der Betätigungsvorrichtung auf einer ersten Bewegungsbahn auf den Ventilsitz gepresst ist und in einer zweiten Position der Betätigungsvorrichtung auf der ersten Bewegungsbahn vom Ventilsitz abgehoben ist.

8. Ventilvorrichtung nach einem der vorhergehenden Ansprüche,
**dadurch gekennzeichnet, dass** die Betätigungsvorrichtung (57) ausgebildet ist, um die Entleerungsmittel durch Bewegen der Betätigungsvorrichtung entlang einer ersten Bewegungsbahn zu öffnen bzw, zu schließen und um das Hauptventil durch Bewegen der Betätigungsvorrichtung entlang einer zweiten Bewegungsbahn zu öffnen bzw. zu schließen.

9. Ventilvorrichtung nach Anspruch 6 oder 7 und Anspruch 8,
**dadurch gekennzeichnet, dass** die erste Bewegungsbahn zur Betätigung des Belüftungsventils dient und die zweite Bewegungsbahn zur Betätigung des Hauptventils dient.

10. Ventilvorrichtung nach Anspruch 8 oder 9,
**dadurch gekennzeichnet, dass** die zweite Bewegungsbahn eine Drehbewegungsbahn ist und die erste Bewegungsbahn eine axial zu dieser Drehbewegungsbahn liegende translatorische Bewegungsbahn ist.

11. Ventilvorrichtung nach einem der vorhergehenden Ansprüche 8 - 10,
**dadurch gekennzeichnet, dass** die Betätigungsvorrichtung (50) ein in den zwei Bewegungsbahnen bewegbares Betätigungselement (57) umfasst.

12. Ventilvorrichtung nach einem der vorhergehenden Ansprüche 8 - 11,
**dadurch gekennzeichnet, dass** die Entleerungsmittel eine Belüftungsöffnung aufweisen, die einen Zutritt von Umgebungsluft in den Verbindungskanal zwecks Entleerung der Flüssigkeit aus dem Verbindungskanal erlaubt, vorzugsweise durch die Abgabeöffnung.

13. Ventilvorrichtung nach einem der vorhergehenden Ansprüche 8-12,
**gekennzeichnet durch** eine Führungsvorrichtung (120,121) zum Führen der Betätigungsvorrichtung entlang der ersten und zweiten Bewegungsbahn.

14. Ventilvorrichtung nach Anspruch 13,
**dadurch gekennzeichnet, dass** die Führungsvorrichtung die Betätigungsvorrichtung aus einer ersten, geschlossenen Position, in der das Hauptventil geschlossen und die Entleerungsmittel in einer Entleerungsposition wind
- in einer ersten Betätigungsphase entlang einer ersten Richtung auf der ersten Bewegungsbahn in eine zweite Position führen, in der das Hauptventil geschlossen und die Entleerungsmittel in einer Nicht-Entleerungsposition sind, und
- in einer zweiten Betätigungsphase entlang einer ersten Richtung auf der zweiten Bewegungsbahn in eine dritte, geöffnete Position führen, in der das Hauptventil geöffnet und die Entleerungsmittel in einer Nicht-Entleerungsposition sind.

15. Ventilvorrichtung nach Anspruch 14,
**dadurch gekennzeichnet, dass** die Führungsvorrichtung die Betätigungsvorrichtung aus der dritten, geöffneten Position
- in einer dritten Betätigungsphase in einer zweiten Richtung entlang der zweiten Bewegungsbahn entgegengesetzt zur Bewegung der zweiten Betätigungsphase zurück in die zweite Position führen, und
- in einer vierten Betätigungsphase in einer zweiten Richtung entlang der ersten Bewegungsbahn entgegengesetzt zur Bewegung der ersten Betätigungsphase zurück in die erste Position führen.

16. Ventilvorrichtung nach einem der vorhergehenden Ansprüche,
**dadurch gekennzeichnet, dass** die Betätigungsvorrichtung eine Kulissenführung (121) umfasst.

17. Ventilvorrichtung nach Anspruch 16,
**dadurch gekennzeichnet, dass** die Kulissenführung mindestens einen Stift (120) umfasst, der mit einem Gehäuseabschnitt der Ventilvorrichtung oder mit einem Element der Betätigungsmittel verbunden ist, und eine den Stift führende Kulissenbahn (121), die entsprechend an einem Element der Betätigungsmittel oder am Gehäuse der Ventilvorrichtung ausgebildet ist.

18. Ventilvorrichtung nach einem der vorhergehenden Ansprüche,
**dadurch gekennzeichnet, dass** das Hauptventil als Schieberventil, insbesondere als Drehschieberventil ausgebildet ist.

19. Ventilvorrichtung nach Anspruch 18,
**dadurch gekennzeichnet, dass** das Hauptventil ein erstes Ventilelement (41) mit mindestens einer Durchflussöffnung (41a,b) und ein zweites Ventilelement (42) umfasst, das um eine Achse drehbar ist und mindestens eine exzentrische Dichtungsfläche (42a,b) aufweist, welche die Durchflussöffnung(en) des ersten Ventilelements in der geschlossenen Funktionsstellung verschließt/verschließen.

20. Ventilvorrichtung nach Anspruch 19,
**dadurch gekennzeichnet, dass** das erste Ventilelement (41) und das zweite Ventilelement (42) in offener und geschlossener Funktionsstellung den gleichen axialen Abstand zueinander aufweisen.

21. Ventilvorrichtung nach Anspruch 19 oder 20,
**dadurch gekennzeichnet, dass** das erste Ventilelement (41) als Scheibe mit zwei exzentrischen Öffnungen (41 a,b) ausgebildet ist.

22. Ventilvorrichtung nach einem der vorhergehenden Ansprüche,
**dadurch gekennzeichnet, dass** das Hauptventil (40) zumindest ein Ventilelement (41; 42) aus einem keramischen Material aufweist, vorzugsweise zwei Ventilelemente aus einem keramischen Material.

23. Ventilvorrichtung nach einem der vorhergehenden Ansprüche,
**dadurch gekennzeichnet, dass** die Betätigungsvorrichtung (50) um etwa 90° verschwenkt werden muss, um von der offenen in die geschlossene Funktionsstellung zu gelangen.

24. Ventilvorrichtung nach einem der vorhergehenden Ansprüche,
**dadurch gekennzeichnet, dass** die Ventilvorrichtung zum horizontalen einbau in eine Außenwand ausgebildet ist.

25. Ventilvorrichtung nach einem der vorhergehenden Ansprüche,
**dadurch gekennzeichnet, dass** die Betätigungsvorrichtung ein manuell betätigbares Griffelement aufweist, das mit einer Verbindungsstange zusammenwirkt, die sich durch einen Teil des Verbindungskanals erstreckt, um die Bewegung entlang der ersten Bewegungsbahn auf das Hauptventil zu übertragen.

26. Ventilvorrichtung nach einem der vorhergehenden Ansprüche,
**gekennzeichnet durch** eine erste Rückflussverhinderungsvorrichtung (80) die zwischen Zuflussöffnung (10) und Hauptventil (40) angeordnet ist zur Verhinderung des Zutritts von Schmutzwasser aus der Ventilvorrichtung **durch** die Zuflussöffnung.

## Claims

1. Valve device for frost-resistant outdoor operation, comprising:
- an inlet opening (10),
- an outlet opening (20)
- a connection channel (30) that connects the inlet opening to the outlet opening,
- a main valve 40) that is designed so as in an open operating position to open and in a closed operating position to close the fluid connection through the connection channel,
- an actuating device (50, 57) for actuating the main valve, and
- discharge means (70) for emptying the valve device in the closed operating position,
wherein the discharge means comprise a bypass line (110) that connects a first connection channel portion (31) to a second connection channel portion (32),
**characterized in that** the second connection channel portion (32) in the installed position of the valve device is situated in the direction of gravity above the first connection channel portion (31).

2. Valve device according to claim 1,
**characterized in that** the first connection channel portion (31) in the installed position of the valve device is at a smaller distance from the outlet opening than the second connection channel portion (32).

3. Valve device according to one of the preceding claims,
**characterized in that** the bypass line (110) connects the first connection channel portion (31) to an aeration space (100), which is connected to the second connection channel portion (32).

4. Valve device according to one of the preceding claims,
**characterized in that** the bypass line is formed in a housing wall portion of the valve device and in the installed position of the valve device extends from the aeration space at least in one section in the direction of gravity down towards the outlet opening.

5. Valve device according to one of the preceding claims,
**characterized in that** the bypass line in every position of the actuating device connects the first and second connection channel portions.

6. Valve device according to one of the preceding claims 1-5,
**characterized in that** the discharge means comprise an ventilation valve (70), which is disposed in the bypass line and which in an open position allows and in a closed position prevents a penetration of ambient air into the connection channel through the bypass line for the purpose of discharging the liquid from the connection channel.

7. Valve device according to claim 6,
**characterized in that** the ventilation valve comprises a valve seat (71) and a valve body (72), which in a first position of the actuating device is pressed along a first path of motion onto the valve seat and in a second position of the actuating device is lifted along the first path of motion off the valve seat.

8. Valve device according to one of the preceding claims,
**characterized in that** the actuating device (57) is designed so as to open and close the discharge means through movement of the actuating device along a first path of motion and to open and close the main valve through movement of the actuating device along a second path of motion.

9. Valve device according to claim 6 or 7 and claim 8,
**characterized in that** the first path of motion is used to actuate the ventilation valve and the second path of motion is used to actuate the main valve.

10. Valve device according to claim 8 or 9,
**characterized in that** the second path of motion is a path of rotational motion and the first path of motion is a path of linear motion situated axially relative to said path of rotational motion.

11. Valve device according to one of the preceding claims 8-10,
**characterized in that** the actuating device (50) comprises an actuating element (57) that is movable in the two paths of motion.

12. Valve device according to the preceding claims 8-11,
**characterized in that** the discharge means have a ventilation opening that allows a penetration of ambient air into the connection channel for the purpose of discharging the liquid from the connection channel, preferably through the outlet opening.

13. Valve device according to one of the preceding claims 8-12,
**characterized by** a guide device (120, 121) for guiding the actuating device along the first and second paths of motion.

14. Valve device according to claim 13,
**characterized in that** the guide device guides the actuating device from a first closed position, in which the main valve is closed and the discharge means are in a discharge position,
- in a first actuating phase in a first direction along the first path of motion into a second position, in which the main valve is closed and the discharge means are in a non-discharge position, and
- in a second actuating phase in a first direction along the second path of motion into a third, open position, in which the main valve is open and the discharge means are in a non-discharge position.

15. Valve device according to claim 14,
**characterized in that** the guide device guides the actuating device from the third, open position
- in a third actuating phase in a second direction along the second path of motion, which is opposite to the motion of the second actuating phase, back into the second position, and
- in a fourth actuating phase in a second direction along the first path of motion, which is opposite to the motion of the first actuating phase, back into the first position.

16. Valve device according to one of the preceding claims,
**characterized in that** the actuating device comprises a gate-type guide (121).

17. Valve device according to claim 16,
**characterized in that** the gate-type guide comprises at least one pin (120), which is connected to a housing portion of the valve device or to an element of the actuating means, and a gate path (121), which guides the pin and is formed in a corresponding manner on an element of the actuating means or on the housing of the valve device.

18. Valve device according to one of the preceding claims,
**characterized in that** the main valve takes the form of a sliding valve, in particular a rotary slide valve.

19. Valve device according to claim 18,
**characterized in that** the main valve comprises a first valve element (41) having at least one throughflow opening (41a, b) and a second valve element (42), which is rotatable about an axis and has at least one eccentric sealing face (42a, b), by means of which the throughflow opening(s) of the first valve element is/are closed in the closed operating position.

20. Valve device according to claim 19,
**characterized in that** the first valve element (41) and the second valve element (42) in open and closed operating position are at the same axial distance from one another.

21. Valve device according to claim 19 or 20,
**characterized in that** the first valve element (41) takes the form of a disk having two eccentric openings (41a, b).

22. Valve device according to one of the preceding claims,
**characterized in that** the main valve (40) comprises at least one valve element (41; 42) made of a ceramic material, preferably two valve elements made of a ceramic material.

23. Valve device according to one of the preceding claims,
**characterized in that** the actuating device (50) has to be swivelled through approximately 90° in order to move from the open into the closed operating position.

24. Valve device according to one of the preceding claims,
**characterized in that** the valve device is designed for horizontal installation in an external wall.

25. Valve device according to one of the preceding claims,
**characterized in that** the actuating device comprises a manually actuable handle element, which interacts with a connecting rod that extends through part of the connection channel in order to transmit the movement along the first path of motion to the main valve.

26. Valve device according to one of the preceding claims,
**characterized by** a first nonreturn device (80), which is disposed between inflow opening (10) and main valve (40) in order to prevent dirty water from passing out of the valve device through the inflow opening.

## Revendications

1. Système de vanne destiné à un fonctionnement en extérieur insensible au gel, comprenant :
- une ouverture d'entrée d'écoulement (10),
- une ouverture de sortie d'écoulement (20),
- un canal de liaison (30) qui relie l'ouverture d'entrée d'écoulement à l'ouverture de sortie d'écoulement,
- une vanne principale (40) qui est conçue pour établir une liaison fluidique par l'intermédiaire du canal de liaison dans une position fonctionnelle ouverte, et pour l'interrompre dans une position fonctionnelle fermée,
- un dispositif d'actionnement (50, 57) pour actionner la vanne principale, et
- des moyens de vidange (70) pour vidanger le système de vanne dans la position fonctionnelle fermée, les moyens de vidange englobant une conduite de dérivation (110) qui relie un premier tronçon de canal de liaison (31) à un deuxième tronçon de canal de liaison (32),
**caractérisé en ce que** le deuxième tronçon de canal de liaison (32), pour la position implantée du système de vanne, est situé au-dessus du premier tronçon de canal de liaison (31) dans la direction de la gravité.

2. Système de vanne selon la revendication 1,
**caractérisé en ce que** dans la position implantée du système de vanne, le premier tronçon de canal de liaison (31) est, dans la direction de la gravité, situé à une distance plus faible de l'ouverture de sortie d'écoulement que le deuxième tronçon de canal de liaison (32).

3. Système de vanne selon l'une des revendications précédentes, **caractérisé en ce que** la conduite de dérivation (110) relie le premier tronçon de canal de liaison (31) à une chambre intermédiaire de ventilation (100), qui est reliée au deuxième tronçon de canal de liaison (32).

4. Système de vanne selon l'une des revendications précédentes, **caractérisé en ce que** la conduite de dérivation est réalisée dans un tronçon de paroi de carter du système de vanne, et s'étend, dans la position implantée du système de vanne, de la chambre intermédiaire de ventilation, au moins le long d'un tronçon, dans la direction de la gravité vers le bas, vers l'ouverture de sortie d'écoulement.

5. Système de vanne selon l'une des revendications précédentes, **caractérisé en ce que** la conduite de dérivation relie, dans chaque position du dispositif d'actionnement, le premier et le deuxième tronçon de canal de liaison.

6. Système de vanne selon l'une des revendications précédentes 1 - 5, **caractérisé en ce que** les moyens de vidange comprennent une valve de ventilation (70) qui est agencée dans la conduite de dérivation, et qui, dans une position ouverte, permet une entrée d'air environnant dans le canal de liaison par l'intermédiaire de la conduite de dérivation en vue de la vidange du liquide du canal de liaison, et empêche cette entrée d'air, dans une position fermée.

7. Système de vanne selon la revendication 6,
**caractérisé en ce que** la valve de ventilation comprend un siège de valve (71) et un corps d'obturation de valve (72) qui, dans une première position du dispositif d'actionnement, est pressé sur le siège de valve selon une première trajectoire de mouvement, et dans une deuxième position du dispositif d'actionnement, est soulevé du siège de valve selon la première trajectoire de mouvement.

8. Système de vanne selon l'une des revendications précédentes, **caractérisé en ce que** le dispositif d'actionnement (57) est conçu pour ouvrir et respectivement fermer les moyens de vidange par déplacement du dispositif d'actionnement le long d'une première trajectoire de mouvement, et pour ouvrir et respectivement fermer la vanne principale par déplacement du dispositif d'actionnement le long d'une deuxième trajectoire de mouvement.

9. Système de vanne selon la revendication 6 ou 7 et la revendication 8, **caractérisé en ce que** la première trajectoire de mouvement sert à l'actionnement de la valve de ventilation, et la deuxième trajectoire de mouvement à l'actionnement de la vanne principale.

10. Système de vanne selon la revendication 8 ou 9, **caractérisé en ce que** la deuxième trajectoire de mouvement est une trajectoire de mouvement rotatif, et la première trajectoire de mouvement est une trajectoire de mouvement de translation s'étendant axialement par rapport à cette trajectoire de mouvement rotatif.

11. Système de vanne selon l'une des revendications précédentes 8 - 10, **caractérisé en ce que** le dispositif d'actionnement (50) comprend un élément d'actionnement (57) mobile sur les deux trajectoires de mouvement.

12. Système de vanne selon l'une des revendications précédentes 8 - 11, **caractérisé en ce que** les moyens de vidange présentent une ouverture de ventilation, qui permet une entrée d'air environnant dans le canal de liaison aux fins d'une vidange du liquide du canal de liaison, de préférence par l'ouverture de sortie d'écoulement.

13. Système de vanne selon l'une des revendications précédentes 8 - 12, **caractérisé par** un dispositif de guidage (120, 121) pour le guidage du dispositif d'actionnement le long de la première et de la deuxième trajectoire de mouvement.

14. Système de vanne selon la revendication 13, **caractérisé en ce que** le dispositif de guidage guide le dispositif d'actionnement, à partir d'une première position, fermée, dans laquelle la vanne principale est fermée et les moyens de vidange sont dans une position de vidange,
- vers une deuxième position dans laquelle la vanne principale est fermée et les moyens de vidange sont dans une position de non vidange, au cours d'une première phase d'actionnement le long d'une première direction sur la première trajectoire de mouvement, et
- vers une troisième position, ouverte, dans laquelle la vanne principale est ouverte et les moyens de vidange sont dans une position de non vidange, au cours d'une deuxième phase d'actionnement le long d'une première direction sur la deuxième trajectoire de mouvement.

15. Système de vanne selon la revendication 14, **caractérisé en ce que** le dispositif de guidage guide le dispositif d'actionnement de la troisième position, ouverte,
- en retour vers la deuxième position, au cours d'une troisième phase d'actionnement dans une deuxième direction le long de la deuxième trajectoire de mouvement, de manière opposée au mouvement de la deuxième phase d'actionnement, et
- en retour vers la première position, au cours d'une quatrième phase d'actionnement dans une deuxième direction le long de la première trajectoire de mouvement, de manière opposée au mouvement de la première phase d'actionnement.

16. Système de vanne selon l'une des revendications précédentes, **caractérisé en ce que** le dispositif d'actionnement comprend un guidage à coulisse (121).

17. Système de vanne selon la revendication 16, **caractérisé en ce que** le guidage à coulisse comprend au moins un tenon (120), qui est lié à un tronçon de carter du système de vanne ou à un élément des moyens d'actionnement, et une voie de coulisse (121) qui guide le tenon et est réalisée de manière respectivement correspondante sur un élément des moyens d'actionnement ou sur le carter du système de vanne.

18. Système de vanne selon l'une des revendications précédentes, **caractérisé en ce que** la vanne principale est réalisée en tant que vanne à coulisse, notamment en tant que vanne à coulisse rotative.

19. Système de vanne selon la revendication 18, **caractérisé en ce que** la vanne principale comprend un premier élément de vanne (41) avec au moins une ouverture de passage d'écoulement (41a,b) et un deuxième élément de vanne (42) qui est rotatif autour d'un axe et présente au moins une surface d'étanchéité excentrée (42a,b) fermant la ou les ouverture(s) de passage d'écoulement (41a,b) du premier élément de vanne, dans la position fonctionnelle fermée.

20. Système de vanne selon la revendication 19, **caractérisé en ce que** le premier élément de vanne (41) et le deuxième élément de vanne (42) présentent la même distance axiale réciproque l'un par rapport à l'autre dans la position fonctionnelle ouverte et fermée.

21. Système de vanne selon la revendication 19 ou 20, **caractérisé en ce que** le premier élément de vanne (41) est réalisé sous la forme d'un disque comportant deux ouvertures (41a,b) excentrées.

22. Système de vanne selon l'une des revendications précédentes, **caractérisé en ce que** la vanne principale (40) comporte au moins un élément de vanne (41, 42) en un matériau céramique, de préférence deux éléments de vanne en un matériau céramique.

23. Système de vanne selon l'une des revendications précédentes, **caractérisé en ce qu'**il est nécessaire de faire pivoter le dispositif d'actionnement (50) d'environ 90° pour parvenir de la position fonctionnelle ouverte à celle fermée.

24. Système de vanne selon l'une des revendications précédentes, **caractérisé en ce que** le système de vanne est conçu pour une implantation horizontale dans une paroi ou un mur extérieur.

25. Système de vanne selon l'une des revendications précédentes, **caractérisé en ce que** le dispositif d'actionnement comprend un élément de poignée pouvant être actionné manuellement et interagissant avec une tige de liaison qui s'étend à travers une partie du canal de liaison, en vue de transmettre à la vanne principale le mouvement le long de la première trajectoire de mouvement.

26. Système de vanne selon l'une des revendications précédentes, **caractérisé par** un premier dispositif anti retour d'écoulement (80), qui est agencé entre l'ouverture d'entrée d'écoulement (10) et la vanne principale (40), en vue d'empêcher l'accès d'eau polluée en provenance du système de vanne à travers l'ouverture d'entrée d'écoulement.
